# FASCICULE DE BREVET EUROPEEN

(11) **EP 3 887 184 B1**
(45) Date de publication et mention de la délivrance du brevet: **27.12.2023**
(21) Numéro de dépôt: 19820836.5
(22) Date de dépôt: 07.11.2019
(51) Int. Cl.: B60J 10/25, B60J 10/32, B60J 10/84, B62D 25/02

(54) **VEHICULE AVEC UN JOINT CHAUSSEE SUR UNE FEUILLURE DEFORMEE**
FAHRZEUG MIT EINER AN EINER VERFORMTEN FALZ ANGEBRACHTEN DICHTUNG
VEHICLE WITH A SEAL FITTED ON A DEFORMED REBATE

(30) Priorité: 27.11.2018 FR 1871920
(43) Date de publication de la demande: 06.10.2021
(73) Titulaire: Stellantis Auto SAS, 78300 Poissy (FR)
(72) Inventeur: RIVIERRE, Laurent, 75015 Paris (FR); KERMORVANT, Mael, 78650 Beynes (FR); BECHU, Thierry, 92130 Issy les Moulineaux (FR)
(86) Numéro de dépôt international: PCT/FR2019/052657
(87) Numéro de publication internationale: WO 2020/109690

(56) Documents cités:
- FR-A1- 2 915 441
- JP-A- 2004 168 123
- JP-A- 2014 121 934

## Description

L'invention concerne un véhicule comportant une feuillure d'entrée de porte avec joint.

Afin de faire l'étanchéité entre la porte latérale et la structure d'un véhicule, il est connu d'installer un joint d'étanchéité sur la structure du véhicule qui forment un encadrement autour de l'ouverture de porte. Cet encadrement est généralement réalisé par l'assemblage de différents éléments en tôle. Cet assemblage crée une feuillure qui s'étend depuis l'encadrement vers l'intérieur de l'ouverture de porte. Le joint d'étanchéité est chaussé sur cette feuillure. Le joint comporte une partie créée par un profilé de section en forme de U formant une pince. Le joint est maintenu sur la feuillure en chaussant ce profilé en forme de U sur ladite feuillure de manière à ce que le joint pince cette feuillure. Pour permettre une meilleure fixation du joint sur la feuillure, des lèvres intérieures s'étendent à l'intérieur du U depuis chacune des branches du U. Lorsque le joint est chaussé sur la feuillure, les lèvres frottent et appuient sur la surface de ladite feuillure. Le joint comporte en outre un profilé tubulaire destiné à être écrasé entre la porte et l'encadrement lorsque la porte est fermée. Un tel joint est décrit par exemple dans les documents FR2699869 ou JP2014121934.

L'inconvénient d'une telle solution est lorsque de l'eau rentre entre la pince maintenant le joint sur la feuillure et la feuillure, en particulier sur la partie basse de l'entrée de porte, tel que par exemple par condensation ou par pénétration lors de forte pluie ou du lavage du véhicule par haute pression, elle ne s'évacue pas. L'eau stagnant dans le joint risque de dégrader le joint ou d'entraîner l'oxydation de la feuillure si celle-ci est réalisée en acier.

L'objectif de l'invention est de remédier à ces inconvénients. En particulier, un des buts de l'invention est de proposer une feuillure de porte permettant une évacuation de l'eau entre le joint et la feuillure d'entrée de porte.

Ce but est atteint selon l'invention, grâce à véhicule comportant une feuillure sur laquelle est chaussé un joint comportant un profilé en forme de U, une lèvre intérieure souple située sur une des branches du U du profilé, à l'intérieur du U, au contact de la face de la feuillure faisant face à la branche du U sur laquelle est disposée ladite lèvre, une zone de contact avec la feuillure située sur l'autre branche du profilé en U, à l'intérieur du U, s'appuyant sur la face opposée de ladite feuillure opposée à celle sur laquelle s'appuie la lèvre intérieure, de sorte que le joint est maintenu sur la feuillure par le pincement de ladite la feuillure, remarquable en ce que la feuillure comporte deux saillies à proximité l'une de l'autre et disposées en vis-à-vis de la lèvre intérieure, de sorte que ladite lèvre soit distante de la face de la feuillure dans l'espace entre ces deux saillies.

Ainsi, avantageusement, la lèvre étant distante de la feuillure entre les deux saillies, un espace est créé entre la lèvre et la feuillure, espace par lequel l'eau située dans le profilé, bloquée entre la feuillure et la lèvre intérieure, peut s'écouler entre les deux saillies en passant par cet espace.

Dans l'invention, le joint comporte plusieurs lèvres intérieures situées à l'intérieur du profilé en U et s'appuyant sur la face de la feuillure comportant les saillies, de sorte à être déformées par lesdites saillies et être distantes de la face de la feuillure entre lesdites saillies.

Ainsi avantageusement, en plaçant plusieurs secondes lèvres, celle-ci peuvent résister davantage aux efforts s'appliquant sur le joint, comme par exemple à la pression d'un panneau ouvrant en position fermé qui appuie sur ledit joint, en particulier lorsque ledit panneau ouvrant comprime le joint contre la feuillure. De plus, les frottements contre la feuillure étant augmentée, le maintien du joint sur la feuillure est amélioré.

Dans un mode de réalisation de l'invention, le profilé comporte une première lèvre intérieure souple sur l'une des branches du U s'appuyant sur la face de la feuillure opposée à celle comportant les saillies de sorte à former la zone de contact du profilé, et une ou plusieurs deuxièmes lèvres intérieures sur l'autre branche du U et au contact de la face de la feuillure comportant les saillies, ladite ou lesdites deuxièmes lèvres intérieures étant distantes de la face de la feuillure dans l'espace entre ces deux saillies par déformation par lesdites saillies.

Ainsi, des lèvres du profilé s'appuient de chaque côté de la feuillure. En configurant ces lèvres de manière à ce qu'elles soient orientées vers le fond du profilé en U, le chaussage du joint sur la feuillure est facilité tout en conservant une bonne capacité à maintenir le joint sur la feuillure.

Dans un autre mode de réalisation de l'invention, les saillies sont obtenues par déformation localisée de la feuillure.

Ainsi, les saillies sont obtenues de manière simple, sans ajout de matière. Par exemple, la feuillure peut être un bord d'une tôle métallique et les saillies formées par emboutissage.

Dans un autre mode de réalisation de l'invention, les saillies sont entièrement dans l'espace entre les branches du U du profilé.

Ainsi avantageusement, les saillies ne sont pas visibles vue de l'extérieur du joint car cachées par les branches du U.

Dans un autre mode de réalisation de l'invention, le véhicule comporte un panneau dormant avec une ouverture délimitée par un encadrement, l'ouverture étant fermée par un panneau ouvrant en position fermée, la feuillure étant disposée sur l'encadrement, dans l'ouverture, le joint étant chaussée sur ladite feuillure de manière à former une étanchéité avec le panneau ouvrant en position fermée.

Dans un autre mode de réalisation de l'invention, le panneau ouvrant ferme une ouverture entre l'intérieur et l'extérieur du véhicule, la feuillure comportant une face intérieure orientée vers l'intérieur du véhicule et une face extérieure orientée vers l'extérieur du véhicule, les saillies étant dirigées vers l'extérieur du véhicule.

Ainsi avantageusement, l'eau s'accumulant étant généralement située entre la face extérieure de la feuillure et le profilé, donc du côté extérieur du véhicule par rapport à ladite feuillure, cette disposition est intéressante pour évacuer cette eau vers l'extérieur du véhicule. De plus, l'eau reçue par le véhicule s'écoulant sur l'extérieur du véhicule, c'est dans cette partie entre la face extérieure de la feuillure et le profilé que risque de s'accumuler le plus d'eau.

Dans un autre mode de réalisation de l'invention, le joint comporte une partie tubulaire sur toute sa longueur, disposé du côté extérieur du véhicule par rapport à la feuillure de manière à être écrasée par le panneau ouvrant en position fermée.

Ainsi, le joint forme une étanchéité efficace avec le panneau ouvrant en position fermée.

Dans un autre mode de réalisation de l'invention, le panneau ouvrant est une porte latérale.

Dans un autre mode de réalisation de l'invention, les saillies sont sur la partie de la feuillure située le long de la partie de l'encadrement formant le bas de l'ouverture de porte.

Ainsi avantageusement, l'eau peut facilement s'évacuer par gravité. De plus, cette disposition évite que de l'eau ne rentre par ruissellement en passant par l'espace laissé libre entre la ou les lèvres et la feuillure entre les saillies.

L'invention sera mieux comprise à la lecture de la description qui va suivre, donnée uniquement à titre d'exemple et faite en se référant aux dessins annexés, sur lesquels :
[fig.1] - La figure 1 est une vue en perspective de la partie avant et latérale d'un véhicule sans la porte latérale avant, sans joint d'étanchéité.
[fig.2] - La figure 2 est une vue en perspective d'une partie de la feuillure située dans l'encadrement de la porte avant latérale, sans joint d'étanchéité.
[fig.3] - La figure 3 est une section suivant des plans parallèles aux axes transversaux et verticaux du véhicule, passant par les axes AA illustré en fig.2.
[fig.4] - La figure 4 est une section suivant des plans parallèles aux axes transversaux et verticaux du véhicule, passant par les axes BB illustrés en fig.2.
[fig.5] - La figure 5 est une section suivant des plans parallèles aux axes transversaux et verticaux du véhicule, passant par les axes CC illustrés en fig.2.

Les dessins sont des représentations schématiques pour faciliter la compréhension de l'invention. Les composants ne sont pas forcément représentés à l'échelle. Les mêmes références correspondent aux mêmes composants d'une figure à l'autre.

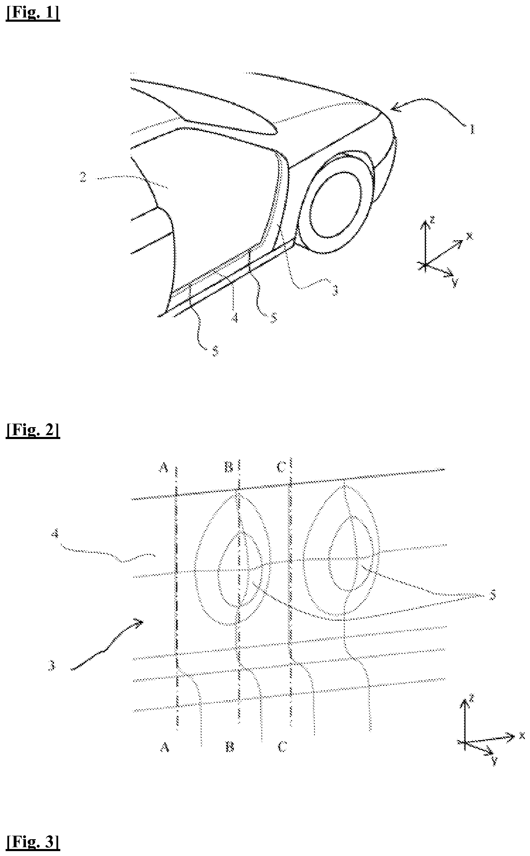

La figure 1 montre la moitié avant d'un véhicule 1 comportant une ouverture de porte 2 qui peut être fermée par un panneau ouvrant tel qu'une porte, non illustrée dans la figure 1 pour plus de clarté. L'ouverture de porte 2 est encadrée par des éléments de la structure du véhicule 1 formant un encadrement 3 de l'ouverture de porte 2. Cet encadrement 3 comporte une feuillure 4 s'étendant vers l'intérieur de l'ouverture de porte 2, tout autour de celle-ci. La feuillure 4 comporte une face intérieure orientée du côté intérieur du véhicule 1 et une face extérieure orientée du côté extérieur du véhicule 1.

L'encadrement 3 comporte une partie basse formant une partie d'un longeron du véhicule 1, et délimitant en partie basse l'ouverture de porte 2. La feuillure 4 située sur la partie basse de l'encadrement 3 comporte deux paires de saillies 5. Comme illustré en figure 2, les deux saillies 5 de chaque paire sont disposées l'une à proximité de l'autre. Chaque saillie 5 a une forme bombée qui dépasse de la face extérieure de la feuillure 4, donc orientée du côté extérieur du véhicule 1. Les paires de saillies 5 sont disposées par exemple à proximité de chacune des extrémités de la partie basse de l'encadrement 3, par exemple en laissant un espace équivalent à un quart ou un cinquième de la longueur de cette partie basse de l'encadrement 3 entre l'une des extrémités de cette partie basse et la plus proche des saillies 5 de cette extrémité. D'autres positions le long de cette partie basse de l'encadrement 3 sont envisageables. Chaque paire de saillies 5 sont éloignées l'une de l'autre, c'est-à-dire séparées par exemple de plusieurs dizaines de centimètres.

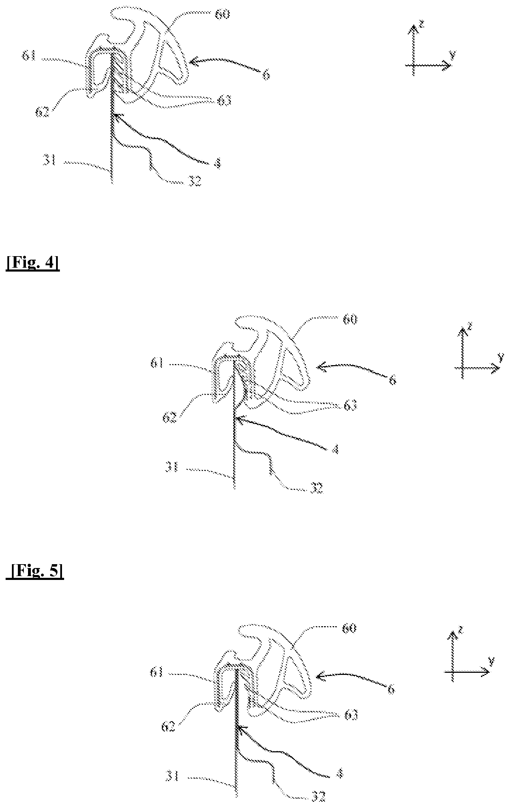

Comme illustré dans les figures de 3 à 5, un joint 6 d'étanchéité est chaussé sur la feuillure 4. Ce joint 6 comporte un profilé 61 en forme de U à l'intérieur duquel rentre la feuillure 4. L'une des branches du U, nommée branche intérieure, est donc disposée en vis-à-vis de la face intérieure de la feuillure 4 et l'autre branche, nommée branche extérieure, en vis-à-vis de la face extérieure. La branche intérieure comporte une première lèvre intérieure 62 souple et la branche extérieure comporte plusieurs deuxièmes lèvres intérieures 63 souples, ces lèvres 62 et 63 s'étendent à l'intérieur du U, c'est à dire entre les deux branches du U. Comme illustré en figure 3, lorsque le joint 6 est chaussé sur la feuillure 4, la première lèvre intérieure 62 appuie sur la face intérieure de la feuillure 4 tandis que les deuxièmes lèvres intérieures 63 appuient sur la face extérieure de la feuillure 4. Ces lèvres intérieures 62 et 63 assurent un maintien efficace du joint 6 sur la feuillure 4 par pincement de la feuillure 4 et frottement sur celle-ci. Le profilé 61 avec les lèvres 62 et 63 forment une pince.

Comme illustré en figure 4, au niveau de chaque saillie 5, les deuxièmes lèvres intérieures 63 sont compressées, poussées en direction de l'extérieur du véhicule 1, vers la branche extérieure, par cette forme bombée des saillies 5 dirigée vers l'extérieure du véhicule 1. Les deux saillies 5 étant à proximité l'une de l'autre, les deuxièmes lèvres intérieures 63 ne peuvent pas suivre le dénivelé créé entre les deux saillies 5. Ainsi, dans la zone située entre chaque saillie 5 d'une même paire de saillies, les deuxièmes lèvres intérieures 63 ne touchent pas la face extérieure de la feuillure 4, et un espace est créé entre la face extérieure de la feuillure 4 et lesdites deuxièmes lèvres intérieures 63, comme illustré en figure 5. De cette manière, l'eau accumulée dans le profilé en U, entre la branche extérieure du U, la feuillure 4 et les deuxièmes lèvres intérieures 63, peut s'évacuer par cet espace créé entre les deuxièmes lèvres intérieures 63 et la feuillure 4.

L'encadrement 3 est réalisé par exemple par une tôle intérieure 31 et une tôle extérieure 32. Ces deux tôles 31 et 32 se rejoignent sur leur bord pour former la feuillure 4. La tôle extérieure 32 forme la partie de l'encadrement situé côté extérieur du véhicule 1 par rapport à la feuillure 4, et la tôle intérieure 31 la partie intérieure. La feuillure 4 est donc formée par la superposition des bords de la tôle extérieure 32 et de la tôle intérieure 31. Les saillies 5 sont disposées sur la tôle extérieure 32, obtenues par déformation de cette tôle extérieure 32. Ces saillies 5 sont obtenues par exemple par emboutissage de la tôle extérieure 32. Les creux formées sur la tôle extérieure 32 par la déformation qui crée chacune des saillies 5, sur la face de la tôle extérieure opposée à celle comportant lesdites saillies 5, est donc recouvert par la tôle intérieure 31. La face intérieure de la feuillure 4, formée par cette tôle intérieure 31, ne comporte donc pas de zone déformée en creux en vis-à-vis des saillies 5, ce qui permet d'assurer un contact continue de la lèvre intérieure 62 contre ladite face intérieure de la feuillure 4.

La position de ces paires de saillies 5 sur la partie basse de l'encadrement 3 est intéressante car elle permet l'évacuation de l'eau accumulée dans le profilé en U par gravité. Les infiltrations d'eau dans le profilé 61 en U étant plus généralement présentes du côté extérieur du véhicule par rapport à la feuillure 4, c'est-à-dire entre la face extérieure de la feuillure 4 et la branche extérieure du profilé 61 en U, il est intéressant de disposer ces saillies 5 de manière à former des zones bombées en saillie en direction de l'extérieur du véhicule 1 pour créer cet espace entre les deuxièmes lèvres intérieures 63 et la face extérieure de la feuillure 4, et permettre ainsi à l'eau de s'écouler vers l'extérieur du véhicule 1.

Ces saillies 5 sont entièrement en vis-à-vis de la branche extérieure du profilé 61 en U lorsque le joint 6 est chaussé sur la feuillure 4, entièrement à l'intérieure du U du profilé. Ainsi, les saillies 5 appuient sur toutes les deuxièmes lèvres intérieures 63. De plus, cette disposition permet de cacher totalement les saillies 5 à l'intérieur du profilé 61 en U, cachées par la branche extérieure du U. Ainsi, un utilisateur du véhicule 1 ne peut pas voir ces saillies 5, et l'esthétique du véhicule 1 n'est pas dégradée.

Chaque saillie 5 est par exemple de longueur d'environ dix millimètres au niveau de sa base, la longueur correspondant à la dimension dans la direction d'extension du profilé 4 lorsque celui-ci est chaussée sur la feuillure 4, et la base correspondant au début de la déformation de la feuillure 4 qui crée la saillie 5. La largeur de chaque saillie 5 est au moins égale à leur longueur, ou encore de dimension supérieure à la longueur, la largeur étant la dimension de la base de la saillie 5 dans la direction perpendiculaire à celle de la longueur et parallèle à la partie de la feuillure 4 disposée autour de ladite saillie. Par exemple, dans le cas d'une feuillure 4 en partie basse de l'encadrement 4 d'une porte latérale du véhicule 1, la feuillure 4 s'étendant dans un plan parallèle à l'axe longitudinal X et à l'axe vertical Z du véhicule, la longueur est la dimension de la saillie 5 suivant cet axe longitudinal X du véhicule 1 et la largeur est la dimension suivant cet axe vertical Z du véhicule 1, les saillies étant alignées parallèlement à l'axe longitudinal X. Afin d'obtenir l'espacement entre les deuxièmes lèvres intérieures 63 et la face extérieure de la feuillure 4 dans la zone entre les deux saillies 5 qui sont à proximité l'une de l'autre, la distance entre le sommet de chacune des saillies 5 qui sont à proximité l'une de l'autre est choisie environ égale à trente millimètres, et la hauteur des saillies 5 par rapport au reste de la feuillure 4 disposés autour de ses saillies 5 est d'environ trois millimètres. La hauteur dans la direction perpendiculaire à la feuillure 4. Dans le mode de réalisation décrit dans les figures, la hauteur des saillies 5 est prise suivant la direction parallèle à l'axe transversale Y du véhicule 1. Le sommet de chaque saillie 5 comporte un profil quasiment plan dans le plan de section parallèle aux axes verticale Z et transversale Y du véhicule 1, cette partie étant sensiblement parallèle à la face extérieure de la feuillure 4 située autour des saillies 5. Cette zone quasiment plane s'étend par exemple sur une distance d'environ trois millimètres. La forme arrondie des saillies 5 avec un sommet aplati, s'étendant en vis-à-vis de la branche extérieure du profilé 61, permet d'appuyer sur plusieurs deuxièmes lèvres intérieures 63 à la fois. L'homme du métier adaptera la forme et les dimensions des saillies 5 aux dimensions du joint 6, et en particulier aux dimensions des deuxièmes lèvres intérieures 63 de manière déformer lesdites deuxièmes lèvres intérieures 63 pour obtenir la création d'un espace entre ces deuxièmes lèvres intérieures 63 et la face extérieure de la feuillure 4 dans la zone entre lesdites saillies 5 d'une même paire.

En variante, la feuillure 4 peut être formée par la superposition des bords de plus de deux tôles, par exemple par la superposition des bords de trois tôles, une première tôle formant la partie intérieure de l'encadrement 3, une deuxième tôle formant la partie extérieure de cet encadrement 3, et une troisième tôle formant une âme de renforcement entre la première et la deuxième tôle renforçant l'encadrement 3, par exemple dans la partie basse de l'encadrement 3 dans le cas où celle-ci forme le longeron latéral du véhicule 1.

En autre variante, la partie de l'encadrement 3 comportant la feuillure 4 avec les saillies 5 est réalisée par un profilé obtenu par extrusion.

En variante, le joint 6 peut être un joint chaussé sur une feuillure 4 disposée sur un encadrement d'une ouverture de coffre arrière, ou d'un autre ouvrant.

En autre variante, la feuillure 4 comporte plus de deux saillies 5 à proximité l'une de l'autre, alignées entre elles.

En autre variante, les saillies 5 sont obtenues par une surépaisseur de matière sur l'une des faces de la feuillure 4, par exemple par ajout de matière.

En autre variante, le joint 6 est un joint lèche-vitre chaussée sur le bord d'un panneau extérieur de porte latéral d'un véhicule disposé le long d'une vitre descendante derrière le panneau extérieur, ce bord du panneau extérieur de porte latéral formant la feuillure 4. Le joint 6 comporte dans ce cas par exemple une lèvre de nettoyage qui appuie sur la vitre descendante de manière à permettre de retirer les gouttes d'eau de la vitre lors de descente de ladite vitre.

En autre variante, les saillies 5 sont orientées vers l'intérieur du véhicule.

## Revendications

1. Véhicule (1) comportant une feuillure (4) sur laquelle est chaussé un joint (6) comportant un profilé (61) en forme de U, une lèvre intérieure (63) souple située sur une des branches du U du profilé (61), à l'intérieur du U, au contact de la face de la feuillure (4) faisant face à la branche du U sur laquelle est disposée ladite lèvre (63), une zone de contact avec la feuillure (4) située sur l'autre branche du profilé en U, à l'intérieur du U, s'appuyant sur la face opposée de ladite feuillure (4) opposée à celle sur laquelle s'appuie la lèvre intérieure (63), de sorte que le joint (60) est maintenu sur la feuillure (4) par le pincement de ladite la feuillure (4), la feuillure (4) comportant deux saillies (5) à proximité l'une de l'autre et disposées en vis-à-vis de la lèvre intérieure (63), de sorte que ladite lèvre (63) soit distante de la face de la feuillure (4) dans l'espace entre ces deux saillies (5), **caractérisé en ce que** le joint (6) comporte plusieurs lèvres intérieures (63) situées à l'intérieur du profilé (61) en U et s'appuyant sur la face de la feuillure (4) comportant les saillies (5), de sorte à être déformées par lesdites saillies (5) et être distantes de la face de la feuillure (4) entre lesdites saillies (5).

2. Véhicule (1) suivant la revendication 1, **caractérisé en ce que** le profilé (60) comporte une première lèvre intérieure (62) souple sur l'une des branches du U s'appuyant sur la face de la feuillure opposée à celle comportant les saillies de sorte à former la zone de contact du profilé (61), et une ou plusieurs deuxièmes lèvres intérieures (63) sur l'autre branche du U et au contact de la face de la feuillure (4) comportant les saillies (5), ladite ou lesdites deuxièmes lèvres intérieures (63) étant distantes de la face de la feuillure (4) dans l'espace entre ces deux saillies (5) par déformation par lesdites saillies (5).

3. Véhicule (1) suivant l'une des revendications précédentes, **caractérisé en ce que** les saillies (5) sont obtenues par déformation localisée de la feuillure (4).

4. Véhicule (1) suivant l'une des revendications précédentes, **caractérisé en ce que** les saillies (5) sont entièrement dans l'espace entre les branches du U du profilé (61).

5. Véhicule (1) suivant l'une des revendications précédentes, **caractérisé en ce qu'**il comporte un panneau dormant avec une ouverture (2) délimitée par un encadrement (3), l'ouverture (2) étant fermée par un panneau ouvrant en position fermée, la feuillure (4) étant disposée sur l'encadrement (3), dans l'ouverture (2), et le joint (6) étant chaussée sur ladite feuillure (4) de manière à former une étanchéité avec le panneau ouvrant en position fermée.

6. Véhicule (1) suivant la revendication 5, **caractérisé en ce que** le panneau ouvrant ferme une ouverture (2) entre l'intérieur et l'extérieur du véhicule (1), la feuillure (4) comportant une face intérieure orientée vers l'intérieur du véhicule (1) et une face extérieure orientée vers l'extérieur du véhicule (1), les saillies (5) étant dirigées vers l'extérieur du véhicule (1).

7. Véhicule (1) suivant la revendication 5 ou 6, **caractérisé en ce que** le joint (5) comporte une partie tubulaire (60) sur toute sa longueur, disposé du côté extérieur du véhicule (1) par rapport à la feuillure (4) de manière à être écrasée par le panneau ouvrant en position fermée.

8. Véhicule (1) suivant l'une des revendications 5 à 7, **caractérisé en ce que** le panneau ouvrant est une porte latérale.

9. Véhicule (1) suivant la revendication 8, **caractérisé en ce que** les saillies (5) sont sur la partie de la feuillure (4) située le long de la partie de l'encadrement formant le bas de l'ouverture (2) de porte.

## Patentansprüche

1. Fahrzeug (1) mit einem Falz (4), auf dem eine Abdichtung (6) mit einem U-förmigen Profil (61) aufgezogen ist, mit einer flexiblen Innenlippe (63), die an einem der U-Schenkel des Profils (61) innerhalb des U in Berührung mit der dem U-Schenkel zugewandten Seite des Falzes (4) angeordnet ist, auf der die Lippe (63) angeordnet ist, mit einem Berührungsbereich mit dem Falz (4) am anderen U-Schenkel des U-Profils innerhalb des U auf der gegenüberliegenden Seite des Falzes aufliegt Wulst (4), der der Wulst gegenüberliegt, auf der die innere Lippe (63) aufliegt, sodass die Abdichtung (60) auf dem Wulst (4) durch Klemmen des Wulstes (4) gehalten wird, wobei der Wulst (4) zwei Vorsprünge (5) aufweist, die nahe beieinander liegen und der inneren Lippe (63) gegenüberliegen, sodass die Lippe (63) im Zwischenraum zwischen diesen beiden Vorsprüngen (5) von der Seite des Wulstes (4) beabstandet ist, **dadurch gekennzeichnet, dass** die Abdichtung (4) 6) mehrere innere Lippen (63) aufweist, die innerhalb des U-förmigen Profils (61) angeordnet sind und sich auf der Seite des Falzes (4) abstützen, die die Vorsprünge (5) aufweist, sodass sie durch die Vorsprünge (5) verformt werden und von der Seite des Falzes (4) zwischen den Vorsprüngen (5) beabstandet sind.

2. Fahrzeug (1) nach Anspruch 1, **dadurch gekennzeichnet, dass** das Profil (60) eine erste innere Lippe (62) aufweist, die an einem der Schenkel des U flexibel ist und sich auf der Seite des Falzes abstützt, die derjenigen gegenüberliegt, die die Vorsprünge aufweist, um den Kontaktbereich des Profils (61) zu bilden, und eine oder mehrere zweite innere Lippen (63) an dem anderen Schenkel des U und in Kontakt mit der Seite des Falzes (4), die die Vorsprünge (5) aufweist, wobei die genannte oder die genannten zweiten inneren Lippen (63) von der Seite des Falzes beabstandet sind RE (4) durch Verformung durch die Vorsprünge (5) in den Zwischenraum zwischen den beiden Vorsprüngen (5).

3. Fahrzeug (1) nach einem der vorhergehenden Ansprüche, **dadurch gekennzeichnet, dass** die Vorsprünge (5) durch örtliche Verformung des Falzes (4) erhalten werden.

4. Fahrzeug (1) nach einem der vorhergehenden Ansprüche, **dadurch gekennzeichnet, dass** die Vorsprünge (5) vollständig in dem Raum zwischen den Schenkeln des U des Profils (61) angeordnet sind.

5. Fahrzeug (1) nach einem der vorhergehenden Ansprüche, **dadurch gekennzeichnet, dass** es eine Blendenplatte mit einer Öffnung (2) aufweist, die durch einen Rahmen (3) begrenzt ist, wobei die Öffnung (2) durch eine in geschlossener Stellung öffnende Platte verschlossen ist, wobei der Falz (4) auf dem Rahmen (3) in der Öffnung (2) angeordnet ist und die Abdichtung (6) auf dem Falz (4) derart aufgebracht ist, dass sie eine Abdichtung mit der in geschlossener Stellung öffnenden Platte bildet.

6. Fahrzeug (1) nach Anspruch 5, **dadurch gekennzeichnet, dass** die öffnende Platte eine Öffnung (2) zwischen dem Inneren und dem Äußeren des Fahrzeugs (1) verschließt, wobei der Falz (4) eine Innenseite aufweist, die zum Inneren des Fahrzeugs (1) und eine Außenseite aufweist, die zum Äußeren des Fahrzeugs (1) gerichtet ist, wobei die Vorsprünge (5) zum Äußeren des Fahrzeugs (1) gerichtet sind.

7. Fahrzeug (1) nach Anspruch 5 oder 6, **dadurch gekennzeichnet, dass** die Abdichtung (5) über ihre gesamte Länge einen rohrförmigen Teil (60) aufweist, der an der Außenseite des Fahrzeugs (1) bezüglich des Falzes (4) so angeordnet ist, dass er in geschlossener Stellung von der öffnenden Platte zerquetscht wird.

8. Fahrzeug (1) nach einem der Ansprüche 5 bis 7, **dadurch gekennzeichnet, dass** die öffnende Platte eine Seitentür ist.

9. Fahrzeug (1) nach Anspruch 8, **dadurch gekennzeichnet, dass** die Vorsprünge (5) auf dem Teil des Falzes (4) angeordnet sind, der entlang dem Teil des Rahmens liegt, der den Boden der Türöffnung (2) bildet.

## Claims

1. Vehicle (1) comprising a rebate (4) on which is mounted a joint (6) comprising a U-shaped profile (61), a flexible inner lip (63) located on one of the branches of the U of the profile (61), inside the U, in contact with the face of the rebate (4) facing the branch of the U on which is arranged said lip (63), a zone of contact with the rebate (4) located on the other branch of the U-shaped profile, inside the U, resting on the opposite face of said rebate (4) to that on which the inner lip (63) bears, so that the seal (60) is held on the rabbet (4) by the pinching of said rabbet (4), the rabbet (4) comprising two projections (5) in proximity to each other and arranged opposite the inner lip (63), so that said lip (63) is distant from the face of the rabbet (4) in the space between these two projections (5), **characterized in that** the seal (6) comprises several inner lips (63) located inside the U-shaped section (61) and bearing on the face of the rebate (4) comprising the projections (5), so as to be deformed by said projections (5) and to be distant from the face of the rebate (4) between said projections (5).

2. Vehicle (1) according to claim 1, **characterized in that** the profiled section (60) comprises a first flexible inner lip (62) on one of the branches of the U resting on the face of the rebate opposite that comprising the projections so as to form the contact zone of the profiled section (61), and one or more second inner lips (63) on the other branch of the U and in contact with the face of the rebate (4) comprising the projections (5), the said or said second inner lips (63) being distant from the face of the rebate (4) in the space between these two projections (5) by deformation by said projections (5).

3. Vehicle (1) according to one of the preceding claims, **characterized in that** the projections (5) are obtained by localized deformation of the rabbet (4).

4. Vehicle (1) according to one of the preceding claims, **characterized in that** the projections (5) are entirely in the space between the branches of the U of the section (61).

5. Vehicle (1) according to one of the preceding claims, **characterized in that** it comprises a fixed panel with an opening (2) delimited by a frame (3), the opening (2) being closed by an opening panel in the closed position, the rabbet (4) being arranged on the frame (3), in the opening (2), and the seal (6) being placed on the said rabbet (4) so as to form a seal with the opening panel in the closed position.

6. Vehicle (1) according to claim 5, **characterized in that** the opening panel closes an opening (2) between the inside and the outside of the vehicle (1), the rabbet (4) comprising an inner face oriented towards the inside of the vehicle (1) and an outer face oriented towards the outside of the vehicle (1), the projections (5) being directed towards the outside of the vehicle (1).

7. Vehicle (1) according to claim 5 or 6, **characterized in that** the seal (5) comprises a tubular part (60) over its entire length, arranged on the outer side of the vehicle (1) with respect to the rebate (4) so as to be crushed by the opening panel in the closed position.

8. Vehicle (1) according to one of claims 5 to 7, **characterized in that** the opening panel is a side door.

9. Vehicle (1) according to claim 8, **characterized in that** the projections (5) are on the part of the rabbet (4) situated along the part of the frame forming the bottom of the door opening (2).
